# EUROPEAN PATENT APPLICATION

(11) **EP 3 291 541 A1**
(43) Date of publication of application: **07.03.2018**
(21) Application number: 16785886.9
(22) Date of filing: 21.04.2016
(51) Int. Cl.: H04N 7/15

(54) **METHOD AND DEVICE FOR REALIZING COMPATIBILITY OF SECONDARY VIDEO**

(30) Priority: 28.04.2015 CN 201510207735
(71) Applicant: ZTE Corporation, Shenzhen, Guangdong 518057 (CN)
(72) Inventor: QI, Wei, Shenzhen Guangdong 518057 (CN)
(74) Representative: Studio Torta S.p.A.
(86) International application number: PCT/CN2016/079913
(87) International publication number: WO 2016/173455

(57) **Abstract**

A method and device for realizing compatibility of secondary videos. The method comprises: connecting a first terminal to a second terminal via an uplink port, wherein the first terminal and the second terminal support different secondary video types, the number of the first terminal is one or more, and the number of the second terminal is one or more; and performing conversion on the signaling type of signaling and the media code stream type of media code streams of the secondary videos transmitted via the uplink port between the first terminal and the second terminal, so as to realize compatibility of the different types of secondary videos of the first terminal and the second terminal.

## Description

### TECHNICAL FIELD

The present disclosure relates to but limiting to the field of conference television technology.

### BACKGROUND

In a conference television system of the related art, by receiving and sending a secondary video, during a meeting, participants may see an additional screen of media information. Such secondary video is mainly used in meetings for sharing documents such as PPTs. However, with the continuous maturity of multimedia and network technology, video communication technology is getting more and more diversified, and types of secondary videos on terminals of conference television systems also show a diversified developing trend. For example, there are standard H239 secondary videos, BFCP secondary videos, and manufacturer-defined secondary videos such as ZTE secondary videos. Devices from different manufacturers, or different models of the same manufacturer may support different types of secondary videos. When a user deploys the system or upgrades the terminals, it often involves compatibility between devices from different manufacturers or different models of terminals, and involves compatibility between different types of secondary video formats.

### SUMMARY

The following is an overview of the topics described in detail herein. This summary is not intended to limit the scope of the claims.

The present disclosure provides a method and a device for realizing compatibility of a secondary video, to solve the problem of incompatibility between different types of secondary videos in the related art, to improve the flexibility of the system deployment and upgrade process, and improve the user experience.

An embodiment of the present disclosure provides a method for realizing compatibility of a secondary video, including the following steps:
connecting a first terminal and a second terminal through a hub; the first terminal and the second terminal supporting for different types of secondary videos; the number of the first terminals being one or more, and the number of the second terminal being one or more; and
converting a type of the secondary video signal transmitted through the hub between the first terminal and the second terminal, and converting a type of the secondary video media stream transmitted through the hub between the first terminal and the second terminal, to realize compatibility of different types of secondary videos between the first terminal and the second terminal.

Optionally, the step of converting a type of the secondary video signal transmitted through the hub between the first terminal and the second terminal, includes:
receiving a secondary video signal sent from the first terminal;
converting the secondary video signal sent from the first terminal to a secondary video signal of a type supported by the second terminal; and
sending the converted secondary video signal to the second terminal for the second terminal to respond.

Optionally, prior to the step of converting the secondary video signal sent from the first terminal to a secondary video signal of a type supported by the second terminal, the method further includes:
determining whether the type of the secondary video signal sent from the first terminal is the same as a previously stored signal type supported by the second terminal;
when the type of the secondary video signal sent from the first terminal is different from the previously stored signal type supported by the second terminal, performing the step: converting the secondary video signal to a secondary video signal of a type supported by the second terminal; and
when the type of the secondary video signal sent from the first terminal is the same as a previously stored signal type supported by the second terminal, sending the secondary video signal to the second terminal.

Optionally, the step of converting a type of the secondary video media stream transmitted through the hub between the first terminal and the second terminal includes:
when responding information of the second terminal is received, determining whether the responding information confirms to receive a secondary video media stream sent from the first terminal;
when the responding information confirms to receive a secondary video media stream sent from the first terminal, receiving the secondary video media stream sent from the first terminal; and converting the secondary video media stream to a secondary video media stream of a type supported by the second terminal and send the converted secondary video media stream to the second terminal.

Optionally, prior to the step of converting the secondary video media stream to a secondary video media stream of a type supported by the second terminal, the method further includes:
parsing the secondary video media stream to obtain a corresponding type of the secondary video media stream;
determining whether the type of the secondary video media stream is the same as a previously stored secondary video media stream type supported by the second terminal;
when the type of the secondary video media stream is different from the previously stored secondary video media stream type supported by the second terminal, performing the step: converting the secondary video media stream to a secondary video media stream of a type supported by the second terminal; and
when the type of the secondary video media stream is the same as the previously stored secondary video media stream type supported by the second terminal, sending the secondary video media stream to the second terminal.

Optionally, after the step of converting the secondary video media stream to a secondary video media stream of a type supported by the second terminal and sending the converted secondary video media stream to the second terminal, the method further includes:
when a stop secondary video signal sent from the first terminal is received, determining the type of the stop secondary video signal; and
when the type of the stop secondary video signal is different from a previously stored type of a stop secondary video signal supported by the second terminal, converting the stop secondary video signal to a stop secondary video signal of the type supported by the second terminal, and sending the converted stop secondary video signal to the second terminal, for the second terminal to respond.

In addition, an embodiment of the present disclosure also provides a device for realizing compatibility of a secondary video, including:
a connection module configured to connect a first terminal and a second terminal through a hub;
the first terminal and the second terminal supporting for different types of secondary videos; the number of the first terminals being one or more, and the number of the second terminal being one or more; and
a conversion module configured to convert a type of the secondary video signal transmitted through the hub between the first terminal and the second terminal, and convert a type of the secondary video media stream transmitted through the hub between the first terminal and the second terminal, to realize compatibility of different types of secondary videos between the first terminal and the second terminal.

Optionally, the conversion module includes:
a receiving unit configured to receive a secondary video signal sent from the first terminal;
a first conversion unit configured to convert the secondary video signal sent from the first terminal to a secondary video signal of a type supported by the second terminal; and
a first sending unit configured to send the converted secondary video signal to the second terminal for the second terminal to respond.

Optionally, the conversion module further includes:
a determining unit configured to determine whether the type of the secondary video signal sent from the first terminal is the same as a previously stored signal type supported by the second terminal; and
the first sending unit is further configured to, when the type of the secondary video signal sent from the first terminal is the same as a previously stored signal type supported by the second terminal, send the secondary video signal sent from the first terminal to the second terminal.

Optionally, the determining unit is further configured to, when responding information of the second terminal is received, determine whether the responding information confirms to receive a secondary video media stream sent from the first terminal;
the receiving unit is further configured to, when the responding information confirms to receive a secondary video media stream sent from the first terminal, receive the secondary video media stream sent from the first terminal; and
the conversion module further includes a second conversion unit configured to convert the secondary video media stream to a secondary video media stream of a type supported by the second terminal and send the converted secondary video media stream to the second terminal.

Optionally, the conversion module further includes:
a parsing unit configured to parse the secondary video media stream to obtain a corresponding type of the secondary video media stream; and
a second sending unit configured to, when the type of the secondary video media stream is the same as the previously stored secondary video media stream type supported by the second terminal, send the secondary video media stream to the second terminal; and
the determining unit is further configured to determine whether the type of the secondary video media stream is the same as the previously stored secondary video media stream type supported by the second terminal.

Optionally, the conversion module further includes:
determining unit configured to, when a stop secondary video signal sent from the first terminal is received, determine the type of the stop secondary video signal; and
the first conversion unit is further configured to, when the type of the stop secondary video signal is different from a previously stored type of a stop secondary video signal supported by the second terminal, convert the stop secondary video signal to a stop secondary video signal of the type supported by the second terminal, and send the converted stop secondary video signal to the second terminal, for the second terminal to respond.

In addition, an embodiment of the present disclosure also provides a system for realizing compatibility of a secondary video, including: a first terminal and a second terminal, wherein the first terminal and the second terminal are connected through a hub, and the first terminal and the second terminal support different types of secondary videos; the number of the first terminals being one or more, and the number of the second terminal being one or more; and
the first terminal and the second terminal are configured to convert the type of the signal and the type of media stream through the hub, to realize the compatibility of different types of secondary videos between the first terminal and the second terminal.

Compared to the related art, through the embodiments of the present disclosure, the first terminal and the second terminal are connected through a hub. The first terminal and the second terminal support different types of secondary videos. Signals and media streams between the first terminal and the second terminal are transmitted through the hub to be performed with signal type conversion and media-stream type conversion, to realize compatibility of different types of secondary videos between the first terminal and the second terminal. It may improve the flexibility of the system deployment and upgrade process, and improve the user experience. Other aspects will become apparent upon reading and understanding the drawings and detailed description.

### BRIEF DESCRIPTION OF THE DRAWINGS

Fig. 1 is a flow chart illustrating a method for realizing compatibility of a secondary video according to a first embodiment of the present disclosure;
Fig. 2 is a flow chart illustrating a detailed process of a signal type conversion step in step S200 as shown in Fig. 1;
Fig. 3 is a flow chart illustrating a detailed process of a media-stream type conversion step in step S200 as shown in Fig. 1;
Fig. 4 is a flow chart illustrating a method for realizing compatibility of a secondary video according to a second embodiment of the present disclosure;
Fig. 5 is a block diagram illustrating functional modules of a device for realizing compatibility of a secondary video according to a first embodiment of the present disclosure;
Fig. 6 is a block diagram illustrating a detailed functional module of a conversion module in Fig. 5;
Fig. 7 is a block diagram illustrating functional modules of a device for realizing compatibility of a secondary video according to a second embodiment of the present disclosure; and
Fig. 8 is a block diagram illustrating functional modules of a system for realizing compatibility of a secondary video according to a preferred embodiment of the present disclosure.

### DETAILED DESCRIPTION

Embodiments of the present disclosure will now be described with reference to the accompanying drawings. It should be noted that, the embodiments in the present application and the various modes in the embodiments may be combined with each other without conflict.

In the embodiment of the present disclosure, the first terminal and the second terminal are connected through a hub. The first terminal and the second terminal support different types of secondary videos. Signals and media streams of the secondary videos between the first terminal and the second terminal are transmitted through the hub to be performed with signal type conversion and media-stream type conversion, to realize compatibility of different types of secondary videos between the first terminal and the second terminal. In the related art, since different types of secondary videos are incompatible, the system deployment and upgrade process have poor flexibility, resulting in poor user experience. The present disclosure may realize compatibility of different types of secondary videos between the first terminal and the second terminal, improve the flexibility of the system deployment and upgrade process, and improve the user experience.

In the related art, since different types of secondary videos are incompatible, the system deployment and upgrade process have poor flexibility, resulting in poor user experience.

An embodiment of the present disclosure provides a method for realizing compatibility of a secondary video.

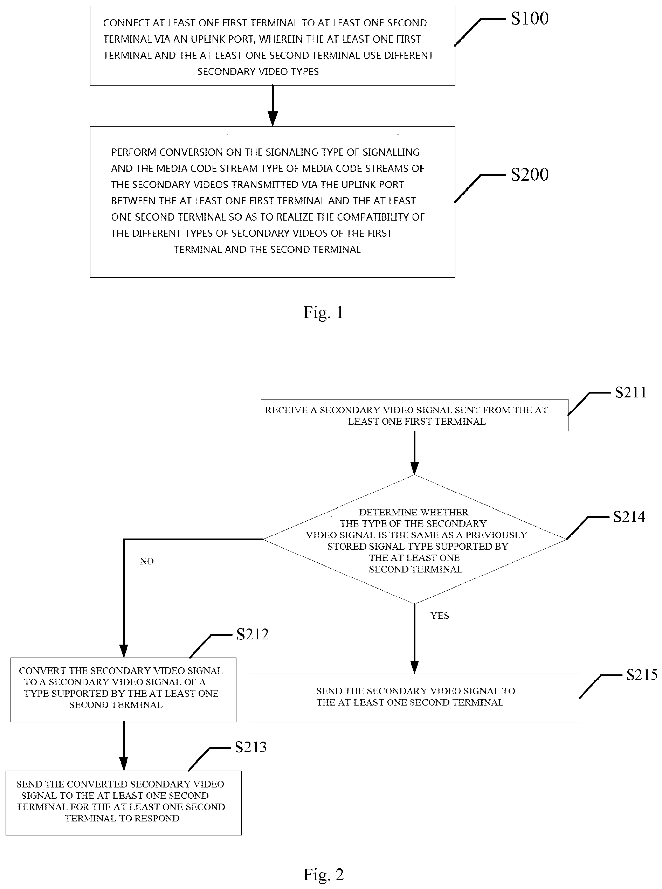

Fig. 1 is a flow chart illustrating a method for realizing compatibility of a secondary video according to a first embodiment of the present disclosure.

In an embodiment, the method for realizing compatibility of a secondary video includes the following steps.

At step S100, a first terminal and a second terminal are connected through a hub; the first terminal and the second terminal supporting for different types of secondary videos; the number of the first terminals being one or more, and the number of the second terminal being one or more.

When the number of the first terminals is more than one, the plurality of first terminals are respectively connected to different ports of the hub. When the number of the second terminals is more than one, the plurality of second terminals are respectively connected to different ports of the hub.

In the present embodiment, the first terminal and the second terminal may be optionally conference televisions. The conference televisions is one kind of multimedia communication for holding a real-time, dual-way, interactive video conference across remotely separated locations in a form of televisions over modern communication network, by utilizing video technology and devices. The first conference television terminal and the second conference television terminal may communicate through a hub. The hub is a virtual terminal configured to connect two conference terminals, to implement transmission of signals and media streams of secondary videos between the two conference terminals. Before a conference starts, information of the first conference television terminal and the second conference television terminal is acquired in advance. The information may be models, port addresses, supported types of secondary video signals, supported types of secondary video media streams, and the like.

At step S200, a type of the secondary video signal transmitted through the hub between the first terminal and the second terminal is converted, and a type of the secondary video media stream transmitted through the hub between the first terminal and the second terminal is converted, to realize compatibility of different types of secondary videos between the first terminal and the second terminal.

Referring to Fig. 2, the process of converting a type of the secondary video signal transmitted through the hub between the first terminal and the second terminal may include the following steps.

In step S211, a secondary video signal sent from the first terminal is received.

In step S212, the secondary video signal sent from the first terminal is converted to a secondary video signal of a type supported by the second terminal.

In step S213, the converted secondary video signal is sent to the second terminal for the second terminal to respond.

When the first conference television terminal and the second conference television terminal require compatibility of a secondary video, the first conference television terminal sends a secondary video signal to the second conference television terminal through the hub, for the second conference television terminal to respond.

Optionally, prior to step S21, the method also includes the following steps.

In step S214, it is determine whether the type of the secondary video signal sent from the first terminal is the same as a previously stored signal type supported by the second terminal.

When the type of the secondary video signal sent from the first terminal is different from the previously stored signal type supported by the second terminal, the step S212 is performed.

In step S215, when the type of the secondary video signal sent from the first terminal is the same as a previously stored signal type supported by the second terminal, the secondary video signal is sent to the second terminal.

When the secondary video signal sent from the first terminal is received, the type of the secondary video signal corresponding to the secondary video signal is obtained by parsing. For example, the first conference television terminal sends a BFCP secondary video signal, and when the second conference television terminal supports for a ZTE secondary video signal, it is determined that the type of the secondary video signal sent from the first conference television is different from the secondary video signal type supported by the second conference television. When the type of the secondary video signal sent from the first conference television is different from the secondary video signal type supported by the second conference television, a MCU (Multi Control Unit) on the hub converts the BFCP secondary video signal into the type of ZTE secondary video signal. When the type of the secondary video signal sent from the first conference television is the same as the secondary video signal type supported by the second conference television terminal, the secondary video signal sent from the first conference television terminal is directly sent to the second conference television terminal, for the second conference television terminal to respond.

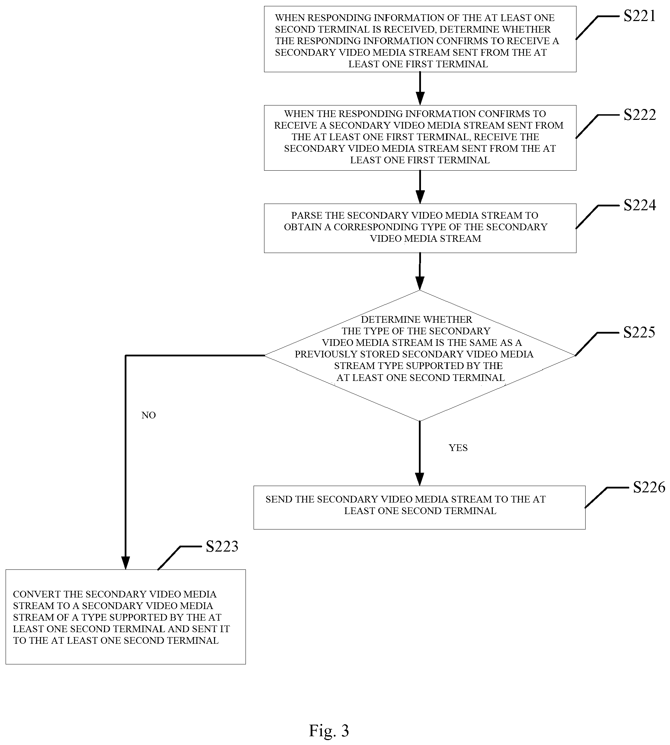

Referring to Fig. 3, the process of converting a type of the secondary video media stream transmitted through the hub between the first terminal and the second terminal may include the following steps.

In step S221, when responding information of the second terminal is received, it is determined whether the responding information confirms to receive a secondary video media stream sent from the first terminal.

In step S222, when the responding information confirms to receive a secondary video media stream sent from the first terminal, the secondary video media stream sent from the first terminal is received.

In step S223, the secondary video media stream is converted to a secondary video media stream of a type supported by the second terminal and sent to the second terminal.

Optionally, prior to step S223, the method also includes the following steps.

In step S224, the secondary video media stream is parsed to obtain a corresponding type of the secondary video media stream.

In step S225, it is determined whether the type of the secondary video media stream is the same as a previously stored secondary video media stream type supported by the second terminal. When the type of the secondary video media stream is different from the previously stored secondary video media stream type supported by the second terminal, the step S223 is performed.

In step S226, when the type of the secondary video media stream is the same as the previously stored secondary video media stream type supported by the second terminal, the secondary video media stream is sent to the second terminal.

For example, the first conference television terminal sends a BFCP secondary video media stream, and when the second conference television terminal supports for a ZTE secondary video media stream, a media processing unit on the hub determines that the type of the secondary video media stream is different from the secondary video media stream type supported by the second terminal, converts the BFCP secondary video media stream into the type of ZTE secondary video media stream, and sends it to the second conference television terminal, for the second conference television terminal to play the converted secondary video media stream. When the type of the secondary video media stream is the same as the secondary video media stream type supported by the second conference television terminal, the secondary video media stream sent from the first conference television terminal is directly sent to the second conference television terminal, for the second conference television terminal to play the secondary video media stream.

In the present embodiment, the first terminal and the second terminal are connected through a hub. The first terminal and the second terminal support different types of secondary videos. Signals and media streams of the secondary videos between the first terminal and the second terminal are transmitted through the hub to be performed with signal type conversion and media-stream type conversion, to realize compatibility of different types of secondary videos between the first terminal and the second terminal. It may realize compatibility of different types of secondary videos between the first terminal and the second terminal, improve the flexibility of the system deployment and upgrade process, and improve the user experience.

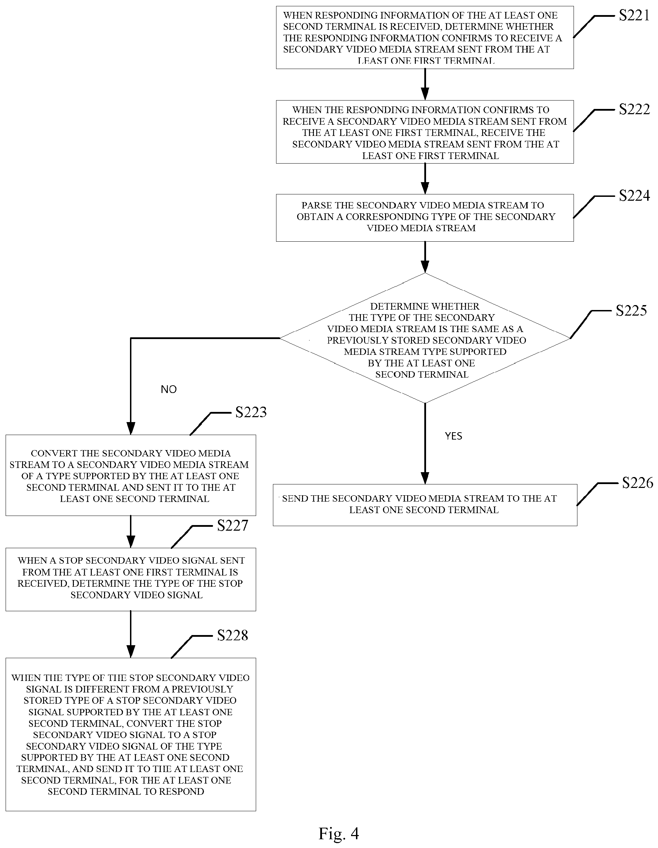

Fig. 4 is a flow chart illustrating a method according to a second embodiment of the present disclosure. Based on the first embodiment of the above method, after the step S223, the method also includes the following steps.

In step S227, when a stop secondary video signal sent from the first terminal is received, the type of the stop secondary video signal is determined.

In step S228, when the type of the stop secondary video signal is different from a previously stored type of a stop secondary video signal supported by the second terminal, the stop secondary video signal is converted to a stop secondary video signal of the type supported by the second terminal, and the converted stop secondary video signal is sent to the second terminal, for the second terminal to respond.

When the type of the stop secondary video signal is different from a previously stored type of a stop secondary video signal supported by the second conference television terminal, the stop secondary video signal is converted to a stop secondary video signal of the type supported by the second conference television terminal. The conversion process is the same as the process of converting the secondary video signal to a secondary video signal of a type supported by the second terminal in step S210, which will not be repeated herein.

In the present embodiment, when a stop secondary video signal sent from the first terminal is received, a type of the stop secondary video signal is determined; and when the type of the stop secondary video signal is different from a previously stored type of a stop secondary video signal supported by the second terminal, the stop secondary video signal is converted to a stop secondary video signal of the type supported by the second terminal, and the converted stop secondary video signal is sent to the second terminal, for the second terminal to respond. It may realize compatibility of a secondary video, and improve the user experience.

An embodiment of the present disclosure also provides a device for realizing compatibility of a secondary video.

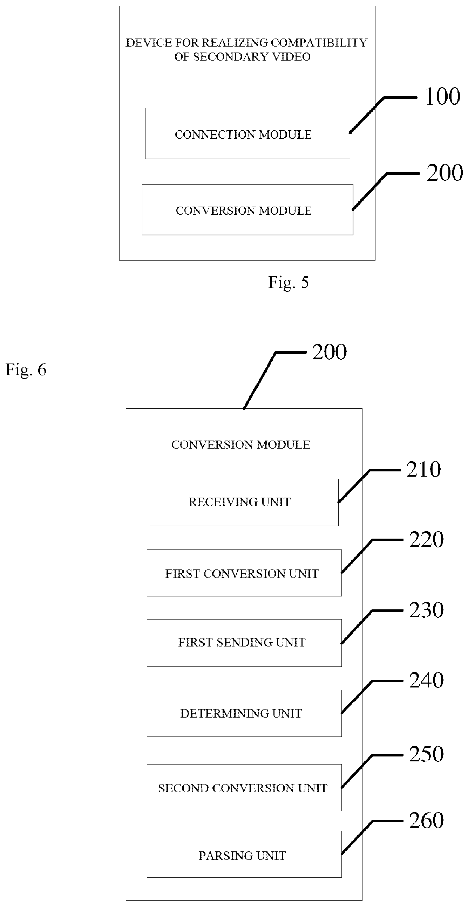

Fig. 5 is a block diagram illustrating functional modules of a device for realizing compatibility of a secondary video according to a first embodiment of the present disclosure.

In an embodiment, the device for realizing compatibility of a secondary video includes the following modules.

The device includes a connection module 100 configured to connect a first terminal and a second terminal through a hub; the first terminal and the second terminal supporting for different types of secondary videos; the number of the first terminals being one or more, and the number of the second terminal being one or more.

In the present embodiment, the first terminal and the second terminal may be optionally conference televisions. The conference televisions is one kind of multimedia communication for holding a real-time, dual-way, interactive video conference across remotely separated locations in a form of televisions over modern communication network, by utilizing video technology and devices. The first conference television terminal and the second conference television terminal may communicate through a hub. The hub is a virtual terminal configured to connect two conference terminals, to implement transmission of signals and media streams of secondary videos between the two conference terminals. Before a conference starts, information of the first conference television terminal and the second conference television terminal is acquired in advance. The information may be models, port addresses, supported types of secondary video signals, supported types of secondary video media streams, and the like.

The device includes a conversion module 200 configured to convert a type of the secondary video signal transmitted through the hub between the first terminal and the second terminal, and convert a type of the secondary video media stream transmitted through the hub between the first terminal and the second terminal, to realize compatibility of different types of secondary videos between the first terminal and the second terminal.

When the first conference television terminal and the second conference television terminal require compatibility of a secondary video, the first conference television terminal sends a secondary video signal to the second conference television terminal through the hub, for the second conference television terminal to respond.

Optionally, referring to Fig. 6, the conversion module 200 includes:
a receiving unit 210 configured to receive a secondary video signal sent from the first terminal; and
a first conversion unit 220 configured to convert the secondary video signal sent from the first terminal to a secondary video signal of a type supported by the second terminal.

When the type of the secondary video signal sent from the first terminal is different from the previously stored signal type supported by the second terminal, the secondary video signal sent from the first terminal is converted to a secondary video signal of a type supported by the second terminal.

The device includes a first sending unit 230 configured to send the converted secondary video signal to the second terminal for the second terminal to respond.

Optionally, the conversion module 200 also includes a determining unit 240 configured to determine whether the type of the secondary video signal sent from the first terminal is the same as a previously stored signal type supported by the second terminal.

The first sending unit 230 is also configured to, when the type of the secondary video signal sent from the first terminal is the same as a previously stored signal type supported by the second terminal, send the secondary video signal to the second terminal.

When the secondary video signal sent from the first terminal is received, the type of the secondary video signal corresponding to the secondary video signal is obtained by parsing. For example, the first conference television terminal sends a BFCP secondary video signal, and when the second conference television terminal supports for a ZTE secondary video signal, it is determined that the type of the secondary video signal sent from the first conference television is different from the secondary video signal type supported by the second conference television. When the type of the secondary video signal sent from the first conference television is different from the secondary video signal type supported by the second conference television, a MCU (Multi Control Unit) on the hub converts the BFCP secondary video signal into the type of ZTE secondary video signal. When the type of the secondary video signal sent from the first conference television is the same as the secondary video signal type supported by the second conference television terminal, the secondary video signal sent from the first conference television terminal is directly sent to the second conference television terminal, for the second conference television terminal to respond.

In order to determine whether the second terminal respond to the secondary video signal, the determining unit 240 is also configured to, when responding information of the second terminal is received, determine whether the responding information confirms to receive a secondary video media stream sent from the first terminal.

The receiving unit 210 is also configured to, when the responding information confirms to receive a secondary video media stream sent from the first terminal, receive the secondary video media stream sent from the first terminal.

The conversion module 200 also includes a second conversion unit 250 configured to convert the secondary video media stream to a secondary video media stream of a type supported by the second terminal and send it to the second terminal.

When the type of the secondary video media stream is different from the previously stored secondary video media stream type supported by the second terminal, convert the secondary video media stream to a secondary video media stream of a type supported by the second terminal

The conversion module 200 also includes:
a parsing unit 260 configured to parse the secondary video media stream to obtain a corresponding type of the secondary video media stream; and
a second sending unit 270 configured to, when the type of the secondary video media stream is the same as the previously stored secondary video media stream type supported by the second terminal, send the secondary video media stream to the second terminal.

The determining unit 240 is also configured to determine whether the type of the secondary video media stream is the same as the previously stored secondary video media stream type supported by the second terminal.

For example, the first conference television terminal sends a BFCP secondary video media stream, and when the second conference television terminal supports for a ZTE secondary video media stream, a media processing unit on the hub determines that the type of the secondary video media stream is different from the secondary video media stream type supported by the second terminal, converts the BFCP secondary video media stream into the type of ZTE secondary video media stream, and sends it to the second conference television terminal, for the second conference television terminal to play the converted secondary video media stream. When the type of the secondary video media stream is the same as the secondary video media stream type supported by the second conference television terminal, the secondary video media stream sent from the first conference television terminal is directly sent to the second conference television terminal, for the second conference television terminal to play the secondary video media stream.

In the present embodiment, the first terminal and the second terminal are connected through a hub. The first terminal and the second terminal support different types of secondary videos. Signals and media streams of the secondary videos between the first terminal and the second terminal are transmitted through the hub to be performed with signal type conversion and media-stream type conversion, to realize compatibility of different types of secondary videos between the first terminal and the second terminal. It may realize compatibility of secondary videos, improve the flexibility, and improve the user experience.

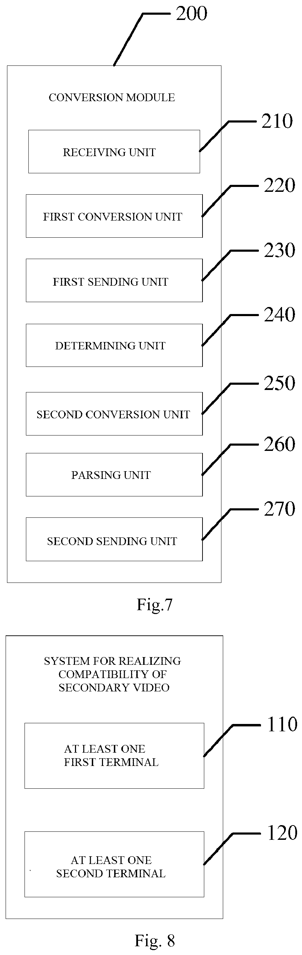

Fig. 7 is a block diagram illustrating functional modules of a device for realizing compatibility of a secondary video according to a second embodiment of the present disclosure. Based on the first embodiment of the above device, the conversion module 200 also includes a determining unit 280 configured to, when a stop secondary video signal sent from the first terminal is received, determine a type of the stop secondary video signal.

The first conversion unit 220 is also configured to, when the type of the stop secondary video signal is different from a previously stored type of a stop secondary video signal supported by the second terminal, convert the stop secondary video signal to a stop secondary video signal of the type supported by the second terminal, and send the converted stop secondary video signal to the second terminal, for the second terminal to respond.

When the type of the stop secondary video signal is different from a previously stored type of a stop secondary video signal supported by the second terminal, the stop secondary video signal is converted to a stop secondary video signal of the type supported by the second conference television terminal. The conversion process is the same as the process of converting the secondary video signal to a secondary video signal of a type supported by the second terminal in step S210, which will not be repeated herein.

In the present embodiment, when a stop secondary video signal sent from the first terminal is received, a type of the stop secondary video signal is determined; and when the type of the stop secondary video signal is different from a previously stored type of a stop secondary video signal supported by the second terminal, the stop secondary video signal is converted to a stop secondary video signal of the type supported by the second terminal, and the converted stop secondary video signal is sent to the second terminal, for the second terminal to respond. It may realize compatibility of different types of secondary videos between the first terminal and the second terminal, improve the flexibility of the system deployment and upgrade process, and improve the user experience.

An embodiment of the present disclosure also provides a system for realizing compatibility of a secondary video.

Fig. 8 is a block diagram illustrating functional modules of a system for realizing compatibility of a secondary video according to a preferred embodiment of the present disclosure.

In an embodiment, the system for realizing compatibility of a secondary video includes a first terminal 110 and a second terminal 120. The first terminal and the second terminal are connected through a hub. The first terminal and the second terminal support different types of secondary videos. The number of the first terminals is one or more, and the number of the second terminal is one or more.

The first terminal and the second terminal are configured to convert the type of the signal and the type of media stream through the hub, to realize the compatibility of different types of secondary videos between the first terminal and the second terminal.

The hub is a virtual terminal configured to connect the first terminal and the second terminal, and implement transmission of signals and media streams of secondary videos between the first terminal and the second terminal.

The first terminal 110 and the second terminal 120 may be optionally conference televisions. The conference televisions is one kind of multimedia communication for holding a real-time, dual-way, interactive video conference across remotely separated locations in a form of televisions over modern communication network, by utilizing video technology and devices. The first terminal 110 and the second terminal 120 are configured to, when a secondary video media stream is received, play the secondary video media stream. The secondary video media stream may be audio, video and the like, depending on user demand and/or setting of the system.

In the present embodiment, the first terminal and the second terminal are connected through a hub. The first terminal and the second terminal support different types of secondary videos. Signals and media streams of the secondary videos between the first terminal and the second terminal are transmitted through the hub to be performed with signal type conversion and media-stream type conversion, to realize compatibility of different types of secondary videos between the first terminal and the second terminal. It may realize compatibility of different types of secondary videos between the first terminal and the second terminal, improve the flexibility of the system deployment and upgrade process, and improve the user experience.

It will be understood by those skilled in the art that all or part of the steps of the embodiments described above may be implemented by a computer program that may be stored in a computer readable storage medium. When the computer program is executed on a corresponding hardware platform (such as a system, a device, an apparatus, a means, etc.), the computer program being executed may include one or a combination of the steps of the method in the embodiments.

Alternatively, all or part of the steps of the embodiments described above may also be implemented by integrated circuits, which may be separately integrated into a plurality of modules, or a plurality of modules or steps are implemented in a single integrated circuit module.

The devices/functional modules/functional units in the above embodiments may be implemented by general purpose computing devices, which may be integrated on a single computing device or may be distributed over a network of multiple computing devices.

The devices/functional modules/functional units in the above embodiments may be implemented in the form of a software function module and may be stored in a computer-readable storage medium when it is sold or used as a separate product. The above-mentioned computer-readable storage medium may be a read-only memory, a magnetic disk, or an optical disk.

### Industrial Applicability

Through the embodiments of the present disclosure, Signals and media streams of the secondary videos between the first terminal and the second terminal are transmitted through the hub to be performed with signal type conversion and media-stream type conversion, to realize compatibility of different types of secondary videos between the first terminal and the second terminal. It may improve the flexibility of the system deployment and upgrade process, and improve the user experience.

## Claims

1. A method for realizing compatibility of a secondary video, comprising:
connecting a first terminal and a second terminal through a hub; the first terminal and the second terminal supporting for different types of secondary videos; and
converting a type of the secondary video signal transmitted through the hub between the first terminal and the second terminal, and converting a type of the secondary video media stream transmitted through the hub between the first terminal and the second terminal, to realize compatibility of different types of secondary videos between the first terminal and the second terminal.

2. The method for realizing compatibility of a secondary video according to claim 1, wherein converting a type of the secondary video signal transmitted through the hub between the first terminal and the second terminal, comprises:
receiving a secondary video signal sent from the first terminal;
converting the secondary video signal sent from the first terminal to a secondary video signal of a type supported by the second terminal; and
sending the converted secondary video signal to the second terminal for the second terminal to respond.

3. The method for realizing compatibility of a secondary video according to claim 2, wherein prior to the step of converting the secondary video signal to a secondary video signal of a type supported by the second terminal, the method further comprises:
determining whether the type of the secondary video signal sent from the first terminal is the same as a previously stored signal type supported by the second terminal;
when the type of the secondary video signal sent from the first terminal is different from the previously stored signal type supported by the second terminal, performing the step:
converting the secondary video signal to a secondary video signal of a type supported by the second terminal; and
when the type of the secondary video signal sent from the first terminal is the same as a previously stored signal type supported by the second terminal, sending the secondary video signal sent from the first terminal to the second terminal.

4. The method for realizing compatibility of a secondary video according to claim 1, wherein converting a type of the secondary video media stream transmitted through the hub between the first terminal and the second terminal comprises:
when responding information of the second terminal is received, determining whether the responding information confirms to receive a secondary video media stream sent from the first terminal;
when the responding information confirms to receive a secondary video media stream sent from the first terminal, receiving the secondary video media stream sent from the first terminal; and
converting the secondary video media stream to a secondary video media stream of a type supported by the second terminal and send the converted secondary video media stream to the second terminal.

5. The method for realizing compatibility of a secondary video according to claim 4, wherein prior to the step of converting the secondary video media stream to a secondary video media stream of a type supported by the second terminal, the method further comprises:
parsing the secondary video media stream to obtain a corresponding type of the secondary video media stream;
determining whether the type of the secondary video media stream is the same as a previously stored secondary video media stream type supported by the second terminal;
when the type of the secondary video media stream is different from the previously stored secondary video media stream type supported by the second terminal, performing the step:
converting the secondary video media stream to a secondary video media stream of a type supported by the second terminal; and
when the type of the secondary video media stream is the same as the previously stored secondary video media stream type supported by the second terminal, sending the secondary video media stream to the second terminal.

6. The method for realizing compatibility of a secondary video according to claim 4, wherein after the step of converting the secondary video media stream to a secondary video media stream of a type supported by the second terminal and send the converted secondary video media stream to the second terminal, the method further comprises:
when a stop secondary video signal sent from the first terminal is received, determining the type of the stop secondary video signal; and
when the type of the stop secondary video signal is different from a previously stored type of a stop secondary video signal supported by the second terminal, converting the stop secondary video signal to a stop secondary video signal of the type supported by the second terminal, and sending the converted stop secondary video signal to the second terminal, for the second terminal to respond.

7. A device for realizing compatibility of a secondary video, comprising:
a connection module configured to connect a first terminal and a second terminal through a hub; the first terminal and the second terminal supporting for different types of secondary videos; the number of the first terminals being one or more, and the number of the second terminal being one or more; and
a conversion module configured to convert a type of the secondary video signal transmitted through the hub between the first terminal and the second terminal, and convert a type of the secondary video media stream transmitted through the hub between the first terminal and the second terminal, to realize compatibility of different types of secondary videos between the first terminal and the second terminal.

8. The device for realizing compatibility of a secondary video according to claim 7, wherein the conversion module comprises:
a receiving unit configured to receive a secondary video signal sent from the first terminal;
a first conversion unit configured to convert the secondary video signal sent from the first terminal to a secondary video signal of a type supported by the second terminal; and
a first sending unit configured to send the converted secondary video signal to the second terminal for the second terminal to respond.

9. The device for realizing compatibility of a secondary video according to claim 8, wherein the conversion module further comprises:
a determining unit configured to determine whether the type of the secondary video signal sent from the first terminal is the same as a previously stored signal type supported by the second terminal; and
the first sending unit is further configured to, when the type of the secondary video signal sent from the first terminal is the same as a previously stored signal type supported by the second terminal, send the secondary video signal sent from the first terminal to the second terminal.

10. The device for realizing compatibility of a secondary video according to claim 9, wherein the determining unit is further configured to, when responding information of the second terminal is received, determine whether the responding information confirms to receive a secondary video media stream sent from the first terminal;
the receiving unit is further configured to, when the responding information confirms to receive a secondary video media stream sent from the first terminal, receive the secondary video media stream sent from the first terminal; and
the conversion module further comprises a second conversion unit configured to convert the secondary video media stream to a secondary video media stream of a type supported by the second terminal and send the converted secondary video media stream to the second terminal.

11. The device for realizing compatibility of a secondary video according to claim 10, wherein the conversion module further comprises:
a parsing unit configured to parse the secondary video media stream to obtain a corresponding type of the secondary video media stream; and
a second sending unit configured to, when the type of the secondary video media stream is the same as the previously stored secondary video media stream type supported by the second terminal, send the secondary video media stream to the second terminal; and
the determining unit is further configured to determine whether the type of the secondary video media stream is the same as the previously stored secondary video media stream type supported by the second terminal.

12. The device for realizing compatibility of a secondary video according to claim 8, wherein the conversion module further comprises:
determining unit configured to, when a stop secondary video signal sent from the first terminal is received, determine the type of the stop secondary video signal; and
the first conversion unit is further configured to, when the type of the stop secondary video signal is different from a previously stored type of a stop secondary video signal supported by the second terminal, convert the stop secondary video signal to a stop secondary video signal of the type supported by the second terminal, and send the converted stop secondary video signal to the second terminal, for the second terminal to respond.

13. A system for realizing compatibility of a secondary video, comprising: a first terminal and a second terminal, wherein the first terminal and the second terminal are connected through a hub, and the first terminal and the second terminal support different types of secondary videos; and
the first terminal and the second terminal are configured to convert the type of the signal and the type of media stream through the hub, to realize the compatibility of different types of secondary videos between the first terminal and the second terminal.

14. A computer readable storage medium for storing computer executable instructions, the computer executable instructions implementing the method according to any one of claims 1-6.
